# EUROPÄISCHE PATENTSCHRIFT

(11) **EP 1 789 601 B1**
(45) Veröffentlichungstag und Bekanntmachung des Hinweises auf die Patenterteilung: **26.11.2008**
(21) Anmeldenummer: 05782972.3
(22) Anmeldetag: 09.09.2005
(51) Int. Cl.: C23C 4/10, F16C 17/12

(54) **REIBMATERIALIEN/TRIBOWERKSTOFFE FÜR RADIALE UND AXIALE FOLIENLAGER**
FRICTION MATERIALS/TRIBOLOGICAL MATERIALS FOR RADIAL AND AXIAL FILM BEARINGS
MATERIAUX DE FROTTEMENT/MATERIAUX TRIBOLOGIQUES POUR PALIERS A FEUILLES RADIAUX ET AXIAUX

(30) Priorität: 17.09.2004 DE 102004046320
(43) Veröffentlichungstag der Anmeldung: 30.05.2007
(73) Patentinhaber: BAM Bundesanstalt für Materialforschung und- Prüfung, 12205 Berlin (DE)
(72) Erfinder: WOYDT, Mathias, 12203 Berlin (DE)
(74) Vertreter: Pfenning, Meinig & Partner GbR
(86) Internationale Anmeldenummer: PCT/EP2005/009847
(87) Internationale Veröffentlichungsnummer: WO 2006/029827

(56) Entgegenhaltungen:
- US-A- 4 435 839
- US-A- 6 020 072
- US-A1- 2004 136 898

## Beschreibung

Die Erfindung betrifft die Anwendung von Gleitwerkstoffen in axialen und radialen Folienlagern.

Leaf- ("Garret"-Lager) oder Mehrgleitflächenlager (bump-type) bilden selbsttragende und nachgiebige Lageroberflächen aus. Im Normalbetrieb tragen sie auf einem Luftfilm die Last. Als generelle Vorteile sind zu nennen: reduzierte Kosten, höhere Geschwindigkeiten, geringeres Gewicht, höherer Wirkungsgrad, und verbesserte Kompensierung von Schiefstellung und Wellenverformungen. Während des Hoch- und Herunterfahrens treten bei hohen Gleitgeschwindigkeiten Trockenlaufzustände zwischen Folie und Welle auf, welche Verschleiß an der Folie und der Welle verursachen, bis ein Luftfilm ausgebildet ist. Die Abhebedrehzahl liegt abhängig von Konstruktion und Durchmesser zwischen 8 m/s und 15 m/s. Zuverlässige Langzeitanwendungen mit bis zu 100.000 Start-Stop-Vorgängen erfordern deshalb verschleißbeständige Beschichtungen.

Die Foliendicken sind kleiner als 200 µm und lassen eine Verschleißlänge von nur 25% der Foliendicke zu, da sich sonst die Dämpfungseigenschaften verändern. Eine Beschichtung der Welle in luftgelagerten Folienlagern wird auch deshalb notwendig, da Wellen aus Superlegierungen wie INX-750, René41, INC909 oder MA956 bei 800°C zum adhäsiven Materialübertrag neigen (Literaturstelle 1), wenn sie gegen INX-750 gleiten.

Die Substitution von Chromcarbid (US 5,034,187) in den selbstschmierenden NASA PS200-Beschichtungen, bestehend aus 30% bis 70% Chromcarbid, 5% bis 20% weichen Edelmetallen (Ag), 5% bis 20% Fluoriden und 20% bis 60% metallischem Binder durch Chromoxid führte zu den NASA PS300-Beschichtungen (US 5,866,518) allgemein bestehend aus 60 bis 80% Cr₂O₃, Fluoriden der Gruppe I und II, Ag, Au, Pt, Pd, Rh oder Cu und einem NiCr-Binder und war durch Kosten- und Prozessgesichtspunkte bedingt. Die Porosität von gesinterem PM212 beträgt 22 Vol.-%. Die NASA-Beschichtungen PS302 bis PS321 stellen ein Konzept (41 bis 60 Gew.-% NiCr, ∼METCO 443) mit hohem Binderanteil dar.

Die Verwendung von selbstschmierenden Beschichtungen bestehend aus 20 bis 23% BaF₂, 13 bis 15% CaF₂, 33 bis 38% Cr₂O₃ und 25 bis 33% Ag mit einem wärmebeständigen Ni-Binder 23,5 Ni17Co12,5Cr0,5Al wurde zuerst von S. Niizekiet et al. in Literaturstelle 3 S. Niizeki, T. Yoshioka, H. Mizutani, H. Toyota und T. Hashimoto, Development of solid lubricants for high temperature rolling ceramic bearings (part I): Various solid lubricants based on fluoride compounds, Japanese Journal of Tribology, Vol. 40, No. 12, 1995, S. 1277-1287, vorgestellt.

Der Verschleißkoeffizient des Paares INX-750/PS304 liegt bei 25°C und 500°C in einem engen Bereich von 1.6 bis 2.4 10⁻⁴ mm³/Nm verbunden mit PxV-Werten von 0.11 bis 0.22 MPaxm/s, welche von der NASA in einem Trust-Washer-Tribometer bestimmt wurden.

Der PV-Faktor oder PxV-Wert ist das Produkt aus der dem Lagerdruck und der Oberflächengeschwindigkeit, die normalerweise in (lb/in²)x(ft/min) oder in ISO-Einheiten in Paxm/s angegeben wird. Er beschreibt den Eintrag an mechanischer Energie in das Gleitlager als eine konstruktionsbedingte Beanspruchung oder die maximale Beanspruchung, welche die Reibmaterialien vertragen. Der Term µPV ist identisch mit der erzeugten Wärme in W/mm². Er beschreibt die Grenze zwischen hohen und niedrigen Verschleißbereichen sowie den oberen PV-Grenzwert, an dem das Gleitlager versagt. Hohe PV-Werte bedeuten ein großes Lastaufnahmevermögen des Lagers.

Der weltweit gebräuchliche Verschleißkoeffizient in [mm³/Nm] beschreibt die Verschleißerwartung eines Paares unter bestimmten Beanspruchungsbedingungen, jedoch keine Materialeigenschaft. Er ist definiert als Quotient aus dem Verschleißvolumen geteilt durch Last mal Gleitweg.

Für die Definitionen des Verschleißkoeffizienten und des PxV-Wertes, siehe: ASM handbook "Friction, Lubrication and Wear Technology", Volume 18, October 1992, ISBN 0-87170-380-7 oder ASTM G40-01 "Standard Terminology Relating to Wear and Erosion".

Die Patentanmeldung US 5,370,719 bezieht sich auf Schneideinsätze. Diese bilden offene Tribosysteme. Da die Normalkraft an der Schneidkante unbekannt ist, können aus der Verschleißmarkenbreite keine Verschleißkoeffizienten berechnet werden.

Die Patentanmeldung DE 195 30 517 offenbart eine einphasige, mit auf Schneidkanten aus Stahl abgeschiedener Beschichtung (Hartmetalleinsätze) aus (Ti, Mo)(C, N). Im allgemeinen Verständnis eines Metallurgen unterscheidet sich ein "Stahl" signifikant von einer Superlegierung auf Nickelbasis oder Cobaltbasis.

Die Patentanmeldungen zu Cermets aus Titancarbid oder Titanmolybdäncarbonitrid beziehen sich auf Schneidwerkzeuge. Schneidwerkzeuge bilden offene Tribosysteme, in denen das Schneidwerkzeug kontinuierlich mit dem Werkstück in Wechselwirkung steht, wobei letzteres im Wesentlichen einmal oder nur einmal in Kontakt kommt. Logischerweise besteht das Werkstück nicht aus Cermets.

Das Folienlager selbst bildet ein geschlossenes Tribosystem bestehend aus periodisch, entsprechend dem Eingriffsverhältnis wechselwirkenden Oberflächen, welches sich von einem offenen Tribosystem signifikant unterscheidet.

Die DE 195 48 718 beschreibt Beschichtungen aus selbstschmierenden Oxiden (Lubricious Oxides, LO) für tribologisch beanspruchte, flüssig geschmierte Oberflächen in Verbrennungsmotoren. Diese LOs können als Beschichtungen abgeschieden werden oder sich durch Tribooxidation auf Substraten bilden, wie (Ti, Mo)(C, N). Bestimmte Binderarten werden nicht offenbart. Diese LOs sollen Hochdruckadditive (EP) und Verschleißschutzadditive (AW) sowie polymere Viskositätsindexverbesserer in flüssigen Schmierstoffen (Motorenöle) substituieren. Folglich laufen diese LOs unter Misch-/Grenzreibung und/oder hydrodynamischen Bedingungen und nicht unter Festkörperreibung (Trockenlauf) oder bei hohen Temperaturen wie in Folienlagern.

Die US 6,020,072 und US 6,017,592 offenbaren trockenlaufende Gelenklager für Luft- und Raumfahrtanwendungen bis zu 1600°C, welche naheliegenderweise bei kleinen Geschwindigkeiten (v< 0,5 m/s) laufen und folglich auch keinen aerodynamischen Film aufbauen können. Durch Tribooxidation oder statische Oxidation bilden sich weiche Reaktionsschichten auf bestimmten Materialien aus, wie (Ti, Mo)(C, N), typischerweise Magnéliphasen als unterstöchiometrische Oxide, welche definierte planare Sauerstoffdefekte ausbilden. Für thermisch gespritzte Schichten werden keine Binder offenbart. Die Substrate aus Verbundwerkstoffen bestehen aus SiC, HfC and C-SiC. Das erste und zweite Reibelement, welches das geschlossene Tribosystem (Gelenklager) ausbildet, besteht aus den offenbarten Beschichtungen der Patentanmeldung. Als Beschichtung wird auch Tiₙ₋₂Cr₂O₂ₙ₋₁ offenbart, allerdings ohne Angaben zum tribologischen Verhalten für Gleitgeschwindigkeiten oberhalb von 1 m/s.

Die US 2004/113520 offenbart (Ti,Mo)(C,N)+8-20% Ni/Mo-Binder (TM8,10,20-Güten von Sandvik Hard Materials) für piezoelektrische Hochleistungsmotoren oder Vibrationsmotoren. Die Tribosysteme dieser Motoren führen naturgemäß eine lineare, oszillierende Bewegung bei Schwingweiten kleiner als 15 µm und Schwingungsfrequenzen von 20-40 kHz aus. Der herausragende Unterschied zu Folienlagern besteht in der 1.000 mal größeren erzeugten Reibleistung der trockenlaufenden Folien und der Tatsache, dass die Piezomotoren Reibungszahlen von größer als 0,5 erfordern. Piezomotoren können keinen aerodynamischen Film aufzubauen.

Die DE 196 40 789 offenbart Beschichtungen für flüssiggeschmierte Kolbenringe in Verbrennungskraftmaschinen bestehend aus 50 bis 95 Vol.-% (Ti,Mo)(C,N) als harte Phase und Bindern aus Ni, Co, Fe, welche beispielsweise aus Pulvern mit 59,6 Gew.-% TiC_{0,7}N_{0,3}, 12,0 Gew.-% Mo₂C und 28,4 Gew.-% Ni bestehen.

Die in L.-M. Berger et al, Hartmetallähnliche Schichten gegen Verschleiß und Korrosion, Maschinenmarkt Nr. 8, 1996 dargestellten Ergebnisse zum abrasiven Verschleißwiderstand gemäß ASTM G-65-85 von Cermets und Hartmetallen an einem offenen Tribosystem können nicht auf Folienlager übertragen werden, da diese keine dritten Körper (Abrasivstoffe) oder in Oberflächen des Folienlagers einschlagende Abrasivstoffe vertragen und dürfen demzufolge dort nicht vorhanden sein, insbesondere deshalb weil Partikel in der Größe des Lagerspaltes das Lager blockieren.

Die Ergebnisse aus Skopp, A. und M. Woydt, Ceramic and Ceramic Composite Materials with Improved Friction and Wear Properties, Tribology Transactions, Vol. 38 (2), 1995, S. 233-242 und Woydt, M., A. Skopp, I. Dörfel und K. Wittke, Wear engineering oxides/Anti-wear oxdies, Tribology Transactions Vol. 42, 1999, No. 1, S. 21- 31 und WEAR 218 (1998) 84-95 mit ungeschmierten, artgleichen Gleitpaarungen aus TM10 (R_{PK} der glatten Scheiben ∼ 0,025 µm) bis zu 800°C und 3,68 m/s können nicht in Betracht gezogen werden, da sie mit monolithischen (Ti, Mo)(C, N) mit einem Binder aus 13 Gew.-% Ni und 2 Gew.-% Mo erzielt wurden.

Magnéli-Phase aus (Ti,V)ₙO₂ₙ₋₁ oder (W,Mo)ₙO₃ₙ₋₁ sind für Umgebungstemperaturen in Luft oberhalb von 400-450°C ungeeignet, da sie hin zu stöchiometrischen Zusammensetzungen rückoxidieren. Durch Tiₙ₋₂Cr₂O₂ₙ₋₁, mit 6 ≤ n ≤ 9, kann dies überwunden werden, da es bis 1000°C und darüber hinaus oxidationbeständig ist.

Die PS30x-Beschichtungen stellen den Stand der Technik der Gleitmaterialien in Folienlagern dar, jedoch offenbaren sie auf 10⁻⁵ mm³/Nm begrenzte Verschleißkoeffizienten.

Aufgabe der Erfindung ist daher die Verbesserung der Tribosysteme bestehend aus einem Grundkörper und einem Gegenkörper, die unter ungeschmierten Reibungs-' bedigungen in einer Wechselwirkung stehen, d.h. ohne flüssige Schmierstoffe und/oder Fette und/oder Festschmierstoffe, und zwar auf eine Weise, die zulässt, zuverlässig ohne Schwierigkeiten mit Verschleißkoeffizienten unter 10⁻⁶ mm³/Nm auch verbunden mit PV-Werten größer als 1 Mpaxm/s bei hohen Temperaturen von bis zu 1000°C unter Hochgeschwingkeits-Hochtemperaturbedingungen betrieben zu werden.

Diese Aufgabe wird durch das gattungsgemäße Tribosystem mit den kennzeichnenden Merkmalen des Anspruchs 1 und die Verwendung gemäß den Merkmalen des Anspruchs 20 gelöst. Die weiteren abhängigen Ansprüche zeigen vorteilhafte Weiterbildungen.

Erfindungsgemäß wird ein Tribosystem für radiale und axiale Folienlager bereitgestellt, das einen Grundkörper und einen Gegenkörper enthält. Zwischen Grundkörper und Gegenkörper kann ein Reibkontakt unter kontinuierlicher Gleitreibung erzeugt werden, der die Ausbildung eines Luftfilms erlaubt. Wesentlich für den verschleißfreien Betrieb dieses Tribosystems ist es nun, dass die dem Reibkontakt ausgesetzte Oberfläche mindestens eines Körpers, also des Grundkörpers, und/oder des Gegenkörpers, zumindest bereichsweise metallisch gebundenes (Ti, Mo) (C, N), Tiₙ₋₂Cr₂O₂ₙ₋₁, mit 6≤n ≤9 und/oder Lösungen in fester Phase aus TiO₂-Cr₂O₃ enthält.
Tiₙ₋₂Cr₂O₂ₙ₋₁, mit 6≤n ≤9, bildet diskrete Phase mit planaren Sauerstoffdefekten aus und stellt eine Lösung fester Phasen von unterstöchiometrischem TiO₂ als auch Cr₂O₃ dar und ist keine Mischung aus zwei Phasen/Komponenten. Eine für das atmospärischen Plasmaspritzens (APS) bevorzugte Spritzpulver besteht im wesentlichen aus Cr₂Ti₈O₁₅ und Cr_{0,46}Ti_{0,54}0_{1,77}, wobei auch Cr_{0.15}Ti_{0.85}O_{1.925}, CrTi₂O₅, Cr₂Ti₂O₇ and Cr₂TiO₅ nachgewiesen werden konnten.

Vorzugsweise enthält das metallisch gebundene (Ti, Mo) (C, N) 1 bis 20 at.-% Chrom. Das Spurenelement Chrom verbessert oberhalb von 800°C die Oxidationsbeständigkeit des (Ti, Mo)(C, N) im Dauerbetrieb für Langzeitanwendungen da Mo als MoO₂ und MoO₃ flüchtig wird. Der Chromgehalt sollte nicht 20 Atom.-% Cr übersteigen (bezogen auf die Kationen Ti, Mo und Chrom). Das C:N-Verhältnis der Anionen liegt zwischen 9:1 und 6:4.

Eine andere bevorzugte Variante sieht vor, dass 1 bis 20 at.-% Niob enthalten sind.

Der metallische Binder ist vorzugsweise ausgewählt aus der Gruppe bestehend aus Nickel, Chrom, Kobalt, Molybdän und Niob. Der Binder kann dabei in einem Gewichtsbereich von 6 bis 35 % enthalten sein. Vorzugsweise kann einer der Körper, also der Grundkörper oder der Gegenkörper einen monolithischen Werkstoff aus (Ti, Mo) (C, N) enthalten oder vollständig aus diesem aufgebaut sein.

So können beispielsweise Cermets aus (Ti,Mo)(C,N) bei Temperaturen oberhalb von 700°C durch Walzen direkt zu Folien umgeformt werden, wodurch Beschichtungen vermieden werden können. Die mechanischen Eigenschaften von (Ti, Mo)(C, N) gebunden mit 15 bis 30 Gew.-% NiMo erlauben auch die Fertigung von monolithischen Wellen. Monolithische Wellen und Folien verbinden als bifunktionale Elemente mit sowohl tribologischen als auch mechanischen Eigenschaften.

Die thermische Diffusivität K von Legierungen auf Nickelbasis beträgt bei Raumtemperatur K_{RT}= 2,7 [mm²/s] und steigt auf K₈₀₀= 4,5 [mm²/s] bei 800°C an. Diejenigen von (Ti, Mo)(C, N) hängen vom Bindergehalt ab, bleiben jedoch quasi von der Temperatur mit Werten von K ∼3,90 [mm²/s] unbeeinflusst und befinden sich in derselben Größenordnung. Folglich wird der durch Reibung erzeugte Wärmestrom nicht von der Beschichtung beeinträchtigt.

Die zukünftige Anwendungen von Legierungen auf Kobaltbasis bei 816°C, wie Haynes 188 (UNS R30188; UNS= Unified Numbering System) mit 31 bis 36,5% Kobalt oder Haynes HS25 (UNS R30605; ∼2.4964) mit 46 bis 52% Kobalt, würden kobaltgebundene (Ti, Mo) (C, N) begünstigen, um eine direkte metallurgische Bindung der thermisch gespritzten Schichten am Substrat zu erzielen.

Eine weitere bevorzugte Variante des erfindungsgemäßen Tribosystems sieht vor, dass die Oberfläche des mindestens einen Körpers eine Beschichtung ist. Diese Beschichtung enthält dabei bevorzugt Tiₙ₋₂Cr₂O₂ₙ₋₁ mit 6 ≤ n≤ 9. Alternativ kann die Beschichtung auch aus einer Lösung in fester Phase aus TiO₂-Cr₂O₃ bestehen. Die Beschichtung weist dabei bevorzugt eine Dicke von mindestens 1 µm auf.

Hinsichtlich der Aufbringung der Beschichtung bestehen keinerlei Beschränkungen, so dass alle hierfür aus dem Stand der Technik bekannten und geeigneten Verfahren angewendet werden können. Nur beispielhaft seien hier die physikalische Dampfabscheidung (PVD), die chemische Dampfabscheidung (CVD) oder das thermische Spritzen (APS) genannt.

In einer weiteren bevorzugten Weiterbildung kann zwischen dem beschichteten Körper und der Beschichtung eine Kompensationsschicht zum Ausgleich thermischer Spannung angeordnet sein.

Wenn einer der Körper mit den vorbeschriebenen Materialien beschichtet ist oder einer der Körper monolithisch aus diesem Material aufgebaut ist, kann der korrespondierende Körper mit Aluminiumoxid beschichtet sein. Das Aluminiumoxid weist dabei vorzugsweise eine Reinheit von mehr als 97 Gew.-% und eine Korngröße d₉₀ < 1 µm auf.
Feingekörntes Aluminiumoxid läuft mit geringen Verschleißkoeffizienten gegen (Ti, Mo)(C, N) und Tiₙ₋₂Cr₂O₂ₙ₋₁. Bedingt durch Anisotropien in der linearen Wärmedehnung, dem Elastizitätsmodul und der Diffusivität als Funktion der kristallographischen Orientierung, sind Polykristalle besonders empfindlich gegen durch Wärmeströme (Fluss der Reibungswärme) hervorgerufene Eigenspannungen, wenn die Körner größer als 5 µm sind. Dies kann durch korngefeintes Aluminiumoxid vermieden werden. Korngrößen kleiner als 1 µm verringern in Aluminiumoxid die Kräfte, welche durch Wärmedehnung von einem Korn in einer Richtung erzeugt werden können.

Erfindungsgemäß wird ebenso die Verwendung von metallisch gebundenem (Ti, Mo) (C, N), Tiₙ₋₂Cr₂O₂ₙ₋₁ mit 6 ≤ n ≤ 9 und/oder Lösung in fester Phase aus TiO₂-Cr₂O₃ zur Erhöhung der Verschleißfestigkeit von radialen und axialen Folienlagern bereitgestellt. Hierbei können die genannten Materialien sowohl für die monolithische Herstellung der Körper als auch für deren Beschichtung verwendet werden.

Anhand des nachfolgenden Beispiels und der nachfolgenden Figuren soll der erfindungsgemäße Gegenstand detaillierter erläutert werden, ohne diesen auf die hier beschriebenen speziellen Ausführungsformen einschränken zu wollen.
Fig. 1 zeigt anhand von Diagrammen für unterschiedliche Temperaturen den Verschleißkoeffizienten von thermisch gespritzten rotierenden Scheiben gegen stationäre Proben aus gesintertem Aluminiumoxid (99,7 %) unter ungeschmierten Bedingungen (F_{N} = 10 N und s = 5.000 m).
Fig. 2 stellt anhand von Diagrammen die Reibungszahlen von thermisch gespritzten rotierenden Scheiben gegen stationäre Proben aus gesintertem Aluminiumoxid (99,7 %) unter ungeschmierten Bedingungen (F_{N} = 10 N und s = 5.000 m) dar.

### Beispiel

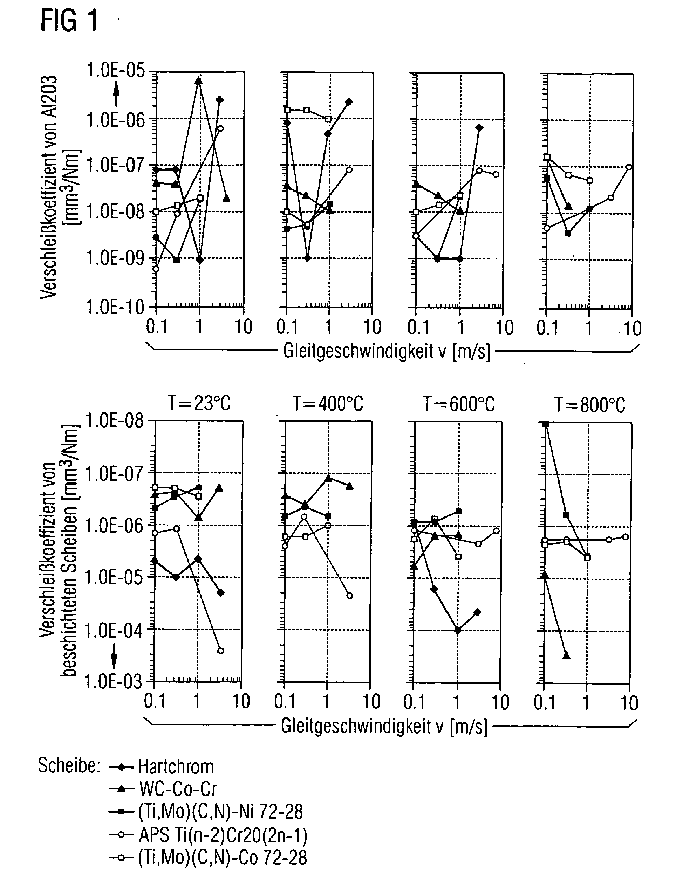

Die Wahl zwischen (Ti, Mo) (C, N) and Tiₙ₋₂Cr₂O₂ₙ₋₁ nach tribologischen Gesichtspunkten hängt von den Betriebsbedingungen des Folienlagers ab. Die Ergebnisse in Fig. 1 wurden mit dem an M. Woydt, K.-H. Habig, High temperature tribology of ceramics, Tribology International, Vol. 22, No. 2 (1989), S. 75-88 beschriebenem Tribometer erzielt. Fig. 1 stellt getrennt für die stationäre Probe (Lagerschale) und die rotierende Probe (Welle) die Verschleißkoeffizienten als Funktion der Gleitgeschwindigkeit (bis zu 7 m/s) bei vier verschiedenen Umgebungstemperaturen im Vergleich zu WC-CoCr und Hartchrom dar.

Es wird klar deutlich, dass die Tiₙ₋₂Cr₂O₂ₙ₋₁-Beschichtung, trotz erhöhter Rauheiten von R_{pK} ∼ 0,61 µm, oberhalb von 600°C und 1 m/s geringe Verschleißraten aufweist, verbunden mit Verschleißraten vom Aluminiumoxid unterhalb von 10⁻⁷ mm³/Nm. In jedem Fall können Wolframcarbidbeschichtungen (WC mit 14 wt.-% CoCr, WC-10Co4Cr, R_{pK} ∼ 0,13 µm) bei 800°C durch übermäßigen oder zu hohen Verschleiß infolge der Bildung von flüchtigem WO₃ nicht eingesetzt werden. Eine nickelgebundene (Ti, Mo) (C, N)-28Ni-Beschichtung mit R_{pK} ∼ 0,339 µm ist verschleißbeständiger als die kobaltgebundene (Ti, Mo) (C, N)-29Co-Beschichtung mit R_{pK} ∼ 0,21 µm. Die in Bild 2 dargestellten Verschleißkoeffizienten können durch eine Absenkung der Rauheit der rotierenden Proben (Welle) auf R_{pK} < 0,03 µm weiter reduziert werden.

Die in Tabelle 1 wiedergegebenen PV-Werte wurden anhand der mit dem in M. Woydt, K.-H. Habig, High temperature tribology of ceramics, Tribology International, Vol. 22, No. 2 (1989), S. 75-88 beschriebenen Tribometer bestimmten Ergebnisse berechnet und in Fig. 1 dargestellt. Die einzelnen PV-Werte der (Ti,Mo)(C,N)-Beschichtungen hängen von der Gleitgeschwindigkeit ab. Daraus folgt, dass die in Tabelle 1 angegebenen Bereiche der PV-Werte bei jeder Temperatur die Gleitgeschwindigkeiten von 0,03 m/s ≤ v ≤ 6 m/s abdecken.

**Tabelle 1:**

| **Gleitpaarung** | | **PxV-Wert [MPaxm/s] für** | | |
|---|---|---|---|---|
| | | **0.03 m/s** ≤ **v** ≤ **6 m/s** | | |
| Stationär (Schale; ε =100%) | Rotierend (Welle; ε <<100%) | 22°C | 400°C | 800°C |
| Al₂O₃ (99.7% rein) | (Ti, Mo) (C, N) -29Co (HVOF) | 40-120 | 20-60 | |
| (Ti, Mo) (C, N) - 15NiMo (TM10) | (Ti, Mo) (C,N)-15NiMo (TM10) ^{•} R_{pK} ∼ 0, 025 µm | 4-50 | 1-35 | 10-100 |
| INX-750 | PS304 | 1,7 | 2,94* | 0,63 |
| Al₂O₃ (99.4% rein) | PS300 | 2,88 | 3,25 | 11,6⁺ |

| | | | | |
|---|---|---|---|---|
| *500°C; ⁺650°C; Daten aus C. Dellacorte, The effect of counterface on the tribological performance of a high temperature solid lubricant composite from 22 to 650°C, NASA TM-107183, 1996 für PS30x berechnet aus Ergebnissen der NASA mit 4,91N und 1 m/s; ^{•} Skopp, A. und M. Woydt, Ceramic and Ceramic Composite Materials with Improved Friction and Wear Properties, Tribology Transactions, Vol. 38 (2), 1995, S. 233-242 und Woydt, M., A. Skopp, I. Dörfel und K. Wittke, Wear engineering oxides/Anti-wear oxdies, Tribology Transactions Vol. 42, 1999, No. 1, S. 21- 31 und WEAR 218 (1998) 84-95 | | | | |

Fig. 1 unterstreicht anhand der Verschleißergebnisse, die über zwei Zehnerpotenzen der Gleitgeschwindigkeit gemessen wurden, dass ein Material für geringe Gleitgeschwindigkeiten (v < 0,3 m/s) ungeeignet sein kann, obwohl es bei hohen Gleitgeschwindigkeiten (v> 3 m/s) einen geringen Verschleiß aufweist und umgekehrt. Das Losbrechmoment des Rotors stellt ein weiteres Auswahlkriterium für die Gleitpaarungen dar, welches durch die Reibungszahl bei gegebener Temperatur bestimmt wird. Die maximal zulässige Reibungszahl der Gleitpaarungen hängt von der Konstruktion und den Abmessungen ab und sollte kleiner als 0,4, bevorzugt kleiner als 0,3 sein.

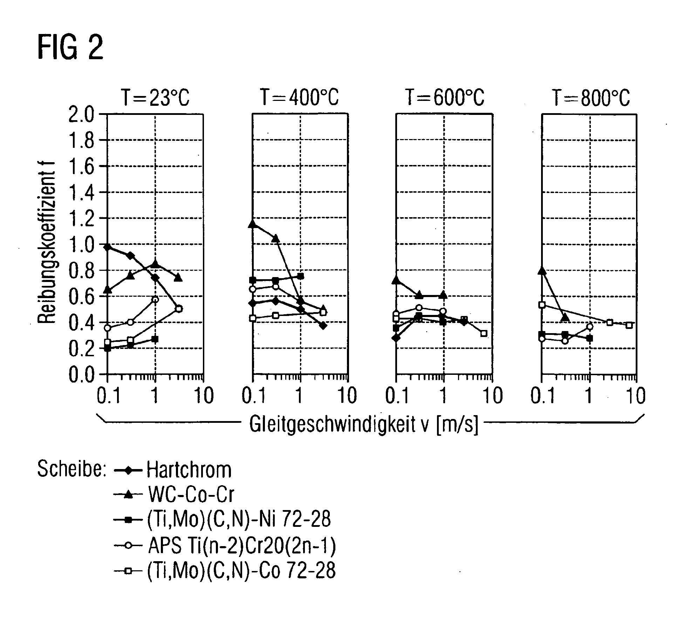

Fig. 2 zeigt die Reibungszahlen unter trockenen, ungeschmierten Bedingungen entsprechend den Verschleißraten in Fig. 1. Die Beschichtungen aus (Ti, Mo)(C,N) zeigen ein bevorzugtes Reibungsverhalten. Es wird betont, dass der Schneidwerkzeuge betreffende Stand der Technik keine Reibungsdaten nennt.

## Patentansprüche

1. Tribosystem für radiale und axiale Folienlager enthaltend einen Grundkörper und einen Gegenkörper, wobei zwischen Grundkörper und Gegenkörper ein Reibkontakt unter kontinuierlicher Gleitreibung bis zur Ausbildung eines Luftfilms ausbildbar ist,
**dadurch gekennzeichnet,**
**dass** die dem Reibkontakt ausgesetzte Oberfläche mindestens eines Körpers zumindest bereichsweise metallisch gebundenes (Ti, Mo)(C,N), Tiₙ₋₂Cr₂O₂ₙ₋₁ mit 6 ≤ n ≤ 9 und/oder Lösung in fester Phase aus TiO₂-Cr₂O₃ enthält.

2. Tribosystem nach Anspruch 1,
**dadurch gekennzeichnet, dass** das metallisch gebundene (Ti, Mo)(C,N) 1 bis 20 Atom-% Chrom enthält.

3. Tribosystem nach einem der vorhergehenden Ansprüche,
**dadurch gekennzeichnet, dass** das metallisch gebundene (Ti, Mo)(C,N) 1 bis 20 Atom-% Niob enthält.

4. Tribosystem nach einem der Ansprüche 1 bis 3, **dadurch gekennzeichnet, dass** der metallische Binder ausgewählt ist aus der Gruppe bestehend aus Nickel, Chrom, Kobalt, Molybdän und Niob.

5. Tribosystem nach einem der vorhergehenden Ansprüche,
**dadurch gekennzeichnet, dass** von 6 bis 35 Gew.-% des metallischen Binders enthalten sind.

6. Tribosystem nach einem der vorhergehenden Ansprüche,
**dadurch gekennzeichnet, dass** mindestens einer der Körper einen monolithischen Werkstoff aus metallisch gebundenem (Ti, Mo)(C,N) enthält oder aus diesem besteht.

7. Tribosystem nach einem der vorhergehenden Ansprüche,
**dadurch gekennzeichnet, dass** die Oberfläche des mindestens einen Körpers eine Beschichtung ist.

8. Tribosystem nach dem vorhergehenden Anspruch,
**dadurch gekennzeichnet, dass** die Beschichtung Tiₙ₋₂Cr₂O₂ₙ₋₁ mit 6 ≤ n ≤ 9 enthält.

9. Tribosystem nach Anspruch 8,
**dadurch gekennzeichnet, dass** die Beschichtung eine Lösung in fester Phase aus TiO₂-Cr₂O₃ enthält.

10. Tribosystem nach einem der Ansprüche 7 bis 9,
**dadurch gekennzeichnet, dass** die Beschichtung eine Dicke von mindestens 1 µm aufweist.

11. Tribosystem nach einem der Ansprüche 7 bis 10,
**dadurch gekennzeichnet, dass** die Beschichtung durch physikalische Dampfabscheidung (PVD), chemische Dampfabscheidung (CVD), thermisches Spritzen (APS) oder HVOF abgeschieden ist.

12. Tribosystem nach einem der Ansprüche 7 bis 11,
**dadurch gekennzeichnet, dass** zwischen beschichtetem Körper und der Beschichtung eine Kompensationsschicht zum Ausgleich thermischer Spannungen angeordnet ist.

13. Tribosystem nach einem der vorhergehenden Ansprüche,
**dadurch gekennzeichnet, dass** einer der Körper mit Tiₙ₋₂Cr₂O₂ₙ₋₁ mit 6 ≤ n ≤ 9 und/oder der Lösung in fester Phase aus TiO₂-Cr₂O₃ beschichtet ist und der andere Körper monolithisch aus metallisch gebundenem (Ti, Mo)(C,N) besteht.

14. Tribosystem nach einem der vorhergehenden Ansprüche,
**dadurch gekennzeichnet, dass** einer der Körper mit Aluminiumoxid beschichtet ist.

15. Tribosystem nach dem vorhergehenden Anspruch,
**dadurch gekennzeichnet, dass** das Aluminiumoxid eine Reinheit von > 97 Gew.-% aufweist.

16. Tribosystem nach einem der Ansprüche 13 oder 14,
**dadurch gekennzeichnet, dass** das Aluminiumoxid eine Korngröße d₉₀ von < 1 µm aufweist.

17. Tribosystem nach einem der vorhergehenden Ansprüche,
**dadurch gekennzeichnet, dass** der Grundkörper eine Lagerschale ist.

18. Tribosystem nach einem der vorhergehenden Ansprüche ,
**dadurch gekennzeichnet, dass** der Grundkörper eine Folie ist.

19. Tribosystem nach einem der vorhergehenden Ansprüche ,
**dadurch gekennzeichnet, dass** der Gegenkörper eine Lagerwelle ist.

20. Verwendung von metallisch gebundenem (Ti,
Mo) (C,N), Tiₙ₋₂Cr₂O₂ₙ₋₁ mit 6 ≤ n ≤ 9 und/oder einer Lösung in fester Phase aus TiO₂-Cr₂O₃ zur Erhöhung der Verschleißfestigkeit von radialen und axialen Folienlagern.

21. Verwendung nach Anspruch 20,
**dadurch gekennzeichnet, dass** die dem Reibkontakt ausgesetzten Körper aus metallisch gebundenem (Ti, Mo) (C,N), Tiₙ₋₂Cr₂O₂ₙ₋₁ mit 6 ≤ n ≤ 9 und/oder einer Lösung in fester Phase aus TiO₂-Cr₂O₃ gefertigt sind und/oder mit diesen beschichtet sind.

## Claims

1. A tribosystem for radial and axial foil bearings, comprising a basic structural component and a counter structural component interacting with the first one, said first and said second component part being in dry frictional unidirectional sliding contact with one another until an air film is formed,
**characterized in that**
the surface of at least one of the structural component parts being exposed to the dry frictional contact contains at least partly metallic bound (Ti,Mo) (C,N), Tiₙ₋₂Cr₂O₂ₙ₋₁ with 6 ≤ n ≤ 9 and/or solid solution of TiO₂-Cr₂O₃.

2. The tribosystem according to claim 1,
**characterized in that**
the metallic bound (Ti,MO)(C,N) contains 1 t0 20 % by atom of chromium.

3. The tribosystem according to one of the preceeding claims,
**characterized in that**
the metallic bound (Ti,Mo)(C,N) contains 1 to 20 % by atom of niobe.

4. The tribosystem according to claim 1,
**characterized in that**
the metallic binder is selected of the group consisting of nickel, chromium cobalt, niobe, molybdenum.

5. The tribosystem according to one of the preceeding claims,
**characterized in that**
6 to 35 % by weight of the metallic binder is comprised.

6. The tribosystem according to one of the preceeding claims,
**characterized in that**
at least one of structural components comprises a monolithic material of metallic bound (Ti,Mo)(C,N) or is composed of it.

7. The tribosystem according to one of the preceeding claims,
**characterized in that**
the surface of the at least one structural component is a coating.

8. The tribosystem according to one of the preceeding claims,
**characterized in that**
the coating contains Tiₙ₋₂Cr₂O₂ₙ₋₁ with 6 ≤ n ≤ 9.

9. The tribosystem according to one of the preceeding claims,
**characterized in that**
coating contains solid solutions of TiO₂Cr₂O₃.

10. The tribosystem according to one of claims 7 to 9,
**characterized in that**
the coating has a thickness of at least 1 µm.

11. The tribosystem according to one of claims 7 to 10,
**characterized in that**
the coating is deposited by physical vapor deposition (PVD), chemical vapor deposition (CVD) or thermal spraying (APS) or HVOF.

12. The tribosystem according to one of claims 7 to 11,
**characterized in that**
between the coated structural component and the coating an intermediate layer to compensate thermal tensions is arranged.

13. The tribosystem according to one of the preceeding claims,
**characterized in that**
one of the structural components is coated with Tiₙ₋₂Cr₂O₂ₙ₋₁ with 6 ≤ n ≤ 9 and/or the solid solution of TiO₂-Cr₂O₃ and the other structural component as monolithic part consists of metallic bound (Ti,Mo)(C,N).

14. The tribosystem according to one of the preceeding claims,
**characterized in that**
one of the structural component is coated with alumina.

15. The tribosystem according to one of the preceeding claims,
**characterized in that**
the alumina has 97 % by weight of purity.

16. The tribosystem according to one of the preceeding claims,
**characterized in that**
the alumina has a grain size of d₉₀ < 1 µm.

17. The tribosystem according to one of the preceeding claims,
**characterized in that**
the basic structural component is a bearing shell.

18. The tribosystem according to one of the preceeding claims,
**characterized in that**
the basic structural component is a foil.

19. The tribosystem according to one of the preceeding claims,
**characterized in that** the
counter structural component is a bearing shaft.

20. Use of metallic bound (Ti,Mo)(C,N) Tiₙ₋₂Cr₂O₂ₙ₋₁ with 6 ≤ n ≤ 9 and/or a solid solution of TiO₂-Cr₂O₃ to increase wear resistance of radial and axial foil bearings.

21. Use according to claim 20,
**characterized in that**
the structural components being exposed to the dry frictional contact are produced from metallic bound (Ti, Mo) (C,N), Tiₙ₋₂Cr₂O₂ₙ₋₁ with 6 ≤ n ≤ 9 and/or a solid solution of TiO₂-Cr₂O₃ or are coated with them.

## Revendications

1. Tribosystème pour palier à feuille radial et axial, contenant un corps de base et un corps opposé, dans lequel, entre le corps de base et le corps opposé peut être constitué un contact à frottement de glissement continu jusqu'à la formation d'un film d'air,
**caractérisé en ce**
**que** la surface d'au moins un corps exposé au contact à frottement contient au moins par endroit du (Ti, Mo) (C,N), du Tiₙ₋₂Cr₂O₂ₙ₋₁ dans lequel 6 ≤ n ≤ 9 liés métalliquement, Ti que la surface exposée au tribocontact contient au moins du (Ti, Mo)(C, N), du Tiₙ₋₂Cr₂O₂ₙ₋₁ dans lequel 6 ≤ n ≤ 9, d'un corps, liés métalliquement et/ou une solution en phase solide de TiO₂-Cr₂O₃.

2. Tribosystème selon la revendication 1,
**caractérisé en ce que** le (Ti, Mo)(C, N) lié métalliquement contient de 1 à 20 % d'atomes de chrome.

3. Tribosystème selon l'une des revendications précédentes,
**caractérisé en ce que** le (Ti, Mo)(C, N) lié au métalliquement contient 1 à 20 % d'atomes de niobium.

4. Tribosystème selon l'une des revendications 1 à 3, **caractérisé en ce que** le liant métallique est choisi dans le groupe constitué du nickel, du chrome, du cobalt, du molybdène et du niobium.

5. Tribosystème selon l'une des revendications précédentes,
**caractérisé en ce qu'**il contient 6 à 35 % en poids de liant métallique.

6. Tribosystème selon l'une des revendications précédentes,
**caractérisé en ce qu'**au moins l'un des corps contient un matériau monolithique constitué de (Ti, Mo)(C, N) lié métalliquement ou est constitué de celui-ci.

7. Tribosystème selon l'une des revendications précédentes,
**caractérisé en ce que** la surface d'au moins un corps est un revêtement.

8. Tribosystème selon l'une des revendications précédentes,
**caractérisé en ce que** le revêtement contient du Tiₙ₋₂Cr₂O₂ₙ₋₁, dans lequel 6 ≤ n ≤ 9.

9. Tribosystème selon la revendication 8,
**caractérisé en ce que** le revêtement contient une solution en phase solide de TiO₂-Cr₂O₃.

10. Tribosystème selon l'une des revendications 7 à 9,
**caractérisé en ce que** le revêtement présente une épaisseur d'au moins 1 µm.

11. Tribosystème selon l'une des revendications 7 à 10,
**caractérisé en ce que** le revêtement est déposé par dépôt en phase vapeur par procédé physique (PVD), dépôt en phase vapeur par procédé chimique (CVD), pulvérisation à chaud (APS) ou HVOF.

12. Tribosystème selon l'une des revendications 7 à 11,
**caractérisé en ce que,** entre le corps revêtu et le revêtement est disposée une couche de compensation pour équilibrer les tensions thermiques.

13. Tribosystème selon l'une des revendications précédentes,
**caractérisé en ce que** l'un des corps est revêtu de Tiₙ₋₂Cr₂O₂ₙ₋₁, dans lequel 6 ≤ n ≤ 9, et/ou d'une solution en phase solide de TiO₂-Cr₂O₃ et l'autre corps est constitué de façon monolithique, de (Ti, Mo)(C, N) lié métalliquement.

14. Tribosystème selon l'une des revendications précédentes,
**caractérisé en ce que** l'un des corps est revêtu d'oxyde d'aluminium.

15. Tribosystème selon l'une des revendications précédentes,
**caractérisé en ce que** l'oxyde d'aluminium présente une pureté > 97 % en poids.

16. Tribosystème selon l'une des revendications 13 ou 14,
**caractérisé en ce que** l'oxyde d'aluminium présente un diamètre de grains d₉₀ < 1 µm.

17. Tribosystème selon l'une des revendications précédentes,
**caractérisé en ce que** le corps de base est un coussinet de palier.

18. Tribosystème selon l'une des revendications précédentes,
**caractérisé en ce que** le corps de base est une feuille.

19. Tribosystème selon l'une des revendications précédentes,
**caractérisé en ce que** le corps opposé est un arbre de support

20. Utilisation de (Ti, Mo)(C, N), Tiₙ₋₂Cr₂O₂ₙ₋₁ dans lequel 6 ≤ n ≤ 9, et/ou d'une solution en phase solide de TiO₂-Cr₂O₃ pour augmenter la résistance à l'usure de paliers à feuille.

21. Utilisation selon la revendication 20,
**caractérisée en ce que** les corps exposés au contact par frottement sont constitués de (Ti, Mo)(C, N), Tiₙ₋₂Cr₂O₂ₙ₋₁, dans lequel 6 ≤ n ≤ 9, liés métalliquement, et/ou d'une solution en phase solide de TiO₂-Cr₂O₃ et/ou sont revêtus avec ceux-ci.
